Europäisches Patentamt

European Patent Office

Office européen des brevets

(11) Publication number: 0 376 473
A2

## (12) EUROPEAN PATENT APPLICATION

(21) Application number: 89312205.1

(22) Date of filing: 24.11.89

(51) Int. Cl.⁵: H04N 1/32, H04N 1/23

(30) Priority: 27.12.88 JP 330626/88

(43) Date of publication of application:
04.07.90 Bulletin 90/27

(84) Designated Contracting States:
DE FR GB

(71) Applicant: KONICA CORPORATION
No. 26-2, Nishishinjuku 1-chome Shinjuku-ku
Tokyo(JP)

(72) Inventor: Kumakura, Shunichi c/o Konica
Corporation
No. 26-2, Nishishinjuku 1-chome
Shinjuku-ku Tokyo(JP)

(74) Representative: Wood, Anthony Charles et al
Urquhart-Dykes & Lord 91 Wimpole Street
London W1M 8AH(GB)

(54) Facsimile apparatus.

(57) A facsimile apparatus having a display element
(20) for displaying data for ordering recording paper
and others in addition to a message to inform that
the remainder of the recording paper turns less than
a prescribed quantity. The data necessary for giving
an order are the kind, size, quantity of the paper in
addition to the telephone number of the supplier. An
order sheet of recording paper according to the data
displayed on the display element (20) is transmitting
automatically by operating a transmitting device
(22).

FIG. 1

# FACSIMILE APPARATUS

This invention relates to a facsimile apparatus which facilitates to give an order for recording paper.

In facsimile apparatuses, received picture informations are recorded by using recording paper accommodated therein. In consideration of the rolled recording paper being limited in quantity, a contrivance to indicate that the remainder of the recording paper turns less than a prescribed quantity has been made to prevent the paper from running out.

In view of the recording paper running out in the course of reception, as well, some facsimile apparatuses have substitute reception functions attached to memorize picture informations after the recording paper runs out, and to record the picture informations stored in a memory on recording paper supplied afresh, when it is loaded.

Irrespective of the presence or absence of the substitute reception function, it is necessary to purchase prescribed recording paper without delay when the residual quantity of it turns small, if there is no stock of it at hand.

A supplier of the recording paper is fixed generally, and so a request for supply is usually to be made to a specified supplier. However, a telephone number and the like of this supplier remain in memory distinctly in few cases.

Therefore it often takes time to find out the telephone number and the like of the supplier.

Some facsimile apparatuses have specified recording paper, and a proper printing quality may not be obtained on other paper. Therefore, the same paper in type and size is usually bought at all times.

Much convenience will be obtained, in this regard, if the telephone number and others of the supplier of the recording paper are displayed in addition to the display that the remainder of the paper is less than a prescribed quantity. More convenience will be attained, in this relation, if automatic ordering can be executed only by an operation of an operator.

An object of the present invention is to propose a facsimile apparatus which enables the solution of such problems of prior art as mentioned above and, at least, a display of the supplier.

The facsimile apparatus of this invention for solving the above-mentioned problems is characterized in that, data for ordering recording paper and others are displayed in addition to a message, to inform that the remainder of the recording paper turns less than a prescribed quantity.

The reduction of the remainder of the recording paper less than the prescribed quantity is detected automatically, and a message to urge the supply of recording paper is displayed in a display element of the facsimile apparatus of the the present invention.

At the same time, the data necessary for ordering the recording paper are displayed in this display element. The data necessary for giving an order comprise the kind, size, quantity, etc. of the paper in addition to the telephone number of the supplier.

These data are inputted beforehand by an operator.

According to these features, it is unnecessary to find out the telephone number in the telephone book or the like, and consequently an operation for ordering is much simplified.

Other objects and features of the present invention will be made apparent hereunder with description of drawings.

Fig. 1 is a block diagram showing one example of a communication control means in a facsimile apparatus of this invention;

Fig. 2 an illustration of one example of an order sheet; and

Figs. 3 and 4 are flowcharts showing examples of the ordering control procedures respectively.

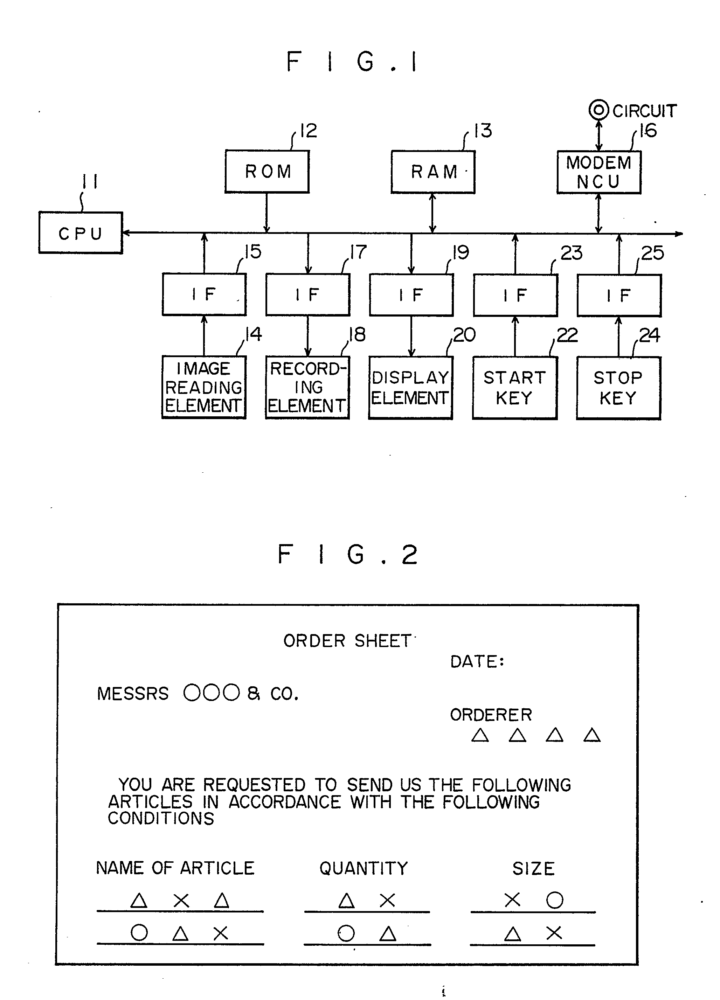

In succession, one embodiment of a facsimile apparatus of this invention will be described in detail with reference to Fig. 1 and others following thereto.

Fig. 1 shows one example of a communication control means in a facsimile apparatus, and numeral 11 denotes CPU which controls communications. 12 denotes ROM wherein various control programs are stored, while 13 denotes RAM wherein received picture signals, picture signals to be transmitted, etc. are stored.

A picture signal read by an image reading element 14 is supplied after it is stored in RAM 13 or directly to a modem and a network control unit (NCU) 16 through an interface 15.

A picture signal inputted from a telephone circuit is passed through this modem and NCU 16 and once stored in RAM 13. Then, the picture signal read out of RAM 13 is supplied to a recording element 18 through an interface 17 and recorded therein. It is also possible to record the received picture signal directly without storing same in RAM 13.

A telephone number and other items of the other side to which transmission is made are supplied to a display element 20 through an interface 19 and displayed therein.

A transmission start key 22 and a transmission stop key 24 are provided, in addition to ten keys and various function keys, in a key operating element (not shown in the figure). Operation signals of these keys are applied to CPU 11 through interfaces 23 and 25 respectively and processings corresponding to the operating states of the keys are executed therein.

When the remainder of recording paper turns less than a prescribed quantity, a display of this state is made on the display element 20 and, in addition, the data on a supplier of the recording paper and other items are displayed on the display element 20. The reduction of the paper less than the prescribed quantity is displayed as follows, for instance:

"Recording paper runs out. Supply it, please".

The data on the supplier of the recording paper and others comprise the telephone number of the supplier, the kind and size of the paper, etc.

An operator can order recording paper he desires only by referring to the contents of this display. In other words, he can dispense with such an operation as giving an order while seeing an order sheet issued previously.

It is presupposed that the telephone number of the supplier, the quantity of the paper to be ordered, the size thereof, etc., in particular, out of the contents displayed in the display element 20 are inputted beforehand by the operator. It is possible to amend these contents.

A facsimile may also be used for ordering. While the order sheet may be written for transmission at every time of ordering in the case when the facsimile apparatus is employed therefor, an ordering operation can be simplified further by memorizing the format of the order sheet beforehand and reading out the contents thereof to use on the occasion of the ordering. The telephone number of the supplier is memorized beforehand in this case, and the order is transmitted automatically to the supplier by pushing the start key 22.

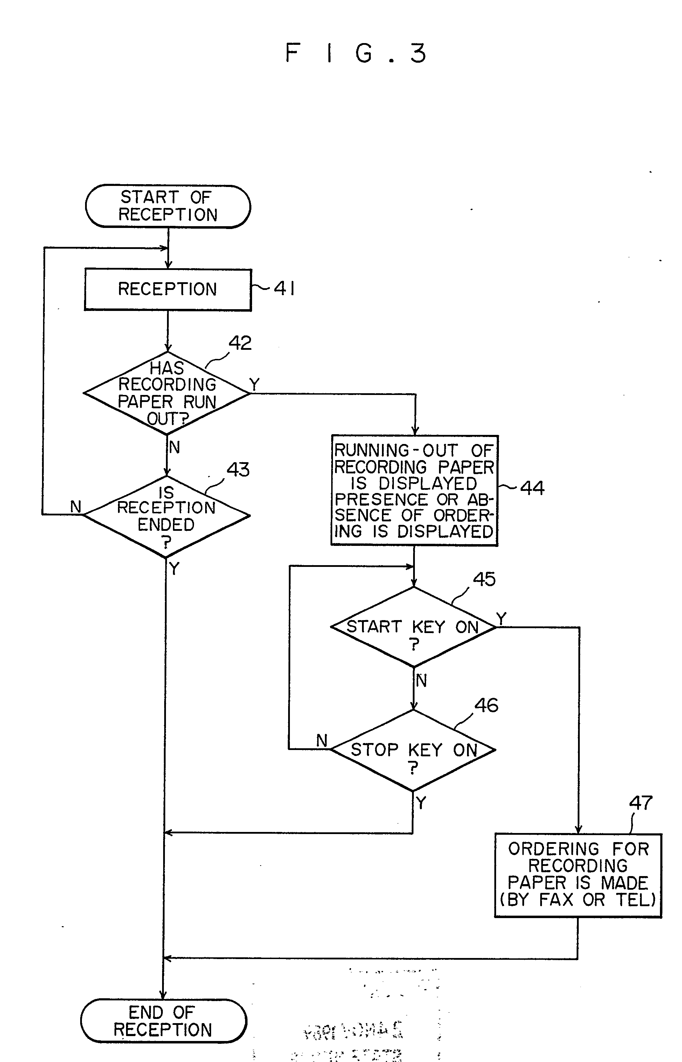

Fig. 2 shows one example of this order sheet.

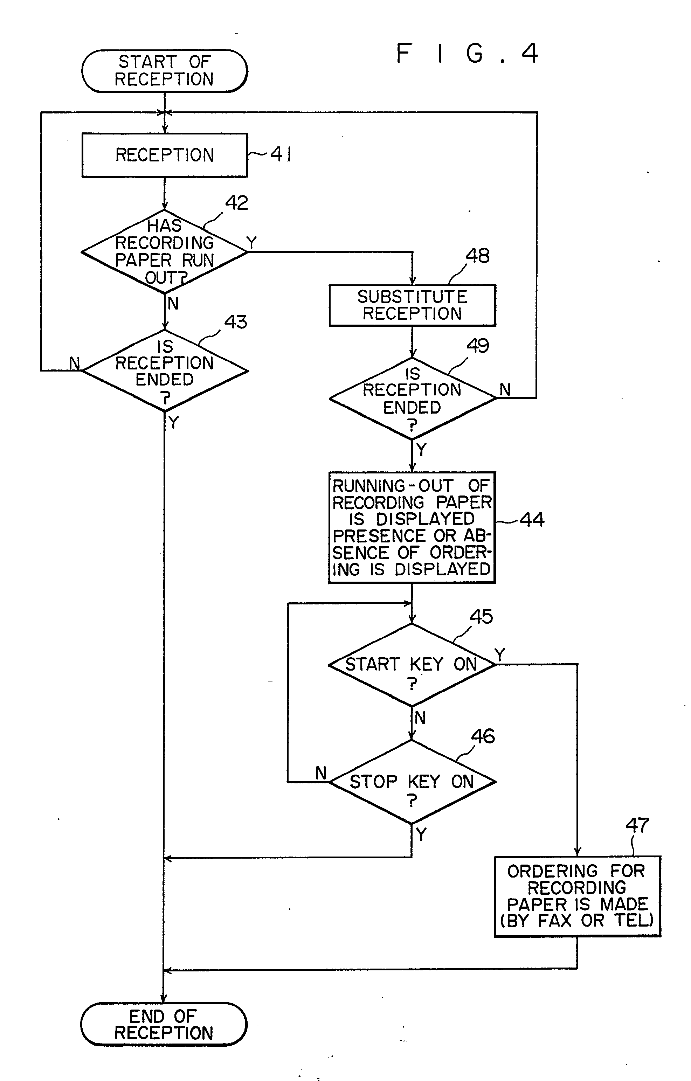

Fig. 3 shows one example of an ordering processing routine. When a picture information is received, a reception processing of the picture information is executed, and whether recording paper runs out or not is judged in the course of this reception processing (steps 41, 42).

The state that the recording paper runs out means that the remainder of the recording paper turns less than a prescribed quantity as described previously, and this state can be detected by a well-known recording paper residual quantity detecting sensor, which is not shown in the figure.

In the case when the recording paper has not run out yet, the state of completion of reception is checked, and when the reception of the picture information is completed, the telephone circuit is turned off in accordance with an ordinary procedure (step 43).

In the case when the recording paper runs out in the course of the reception of the picture information, a message to inform this state is displayed, while the telephone number of the supplier and other items are displayed (step 44). In the case cited in the present example, a message as to whether automatic ordering is made or not is displayed simultaneously with the above items.

Next, the on-off state of the start key 22 or the stop key 24 is checked (steps 45, 46). When the stop key 24 is pushed, the reception is ended as an ordinary step on the basis of a judgement that no automatic ordering is intended.

When the start key 22 is pushed, to the contrary, a processing for ordering the recording paper is executed on the basis of a judgement that the automatic ordering is intended (step 47). Concretely, a telephone call is given automatically to the supplier, and when the circuit is made, ordering data stored in the memory 13, such ones as shown in Fig. 2, for instance, are read out and transmitted sequentially. Accordingly, an order sheet of such a format as shown in Fig. 2 is received by the supplier.

Other than the automatic ordering, a method wherein the supplier is called directly by a telephone, or a method wherein the order sheet of Fig. 2 or the like is transmitted to the supplier by means of the facsimile apparatus, may be taken as well.

Fig. 4 shows a case wherein this invention is applied to a facsimile apparatus having a substitute reception function. This application is effective particularly in the case when running-out of the recording paper is detected in the course of reception of picture informations.

When the running-out of the recording paper is detected in the course of the reception of the picture informations, accordingly, substitute reception is executed immediately (steps 41, 42, 48).

During the substitute reception, the remaining picture informations are stored in the memory 13 or another memory provided separately therefrom. This processing is executed until the picture informations are ended, and when the picture informations run out and the substitute reception is ended, a transfer is made to a processing of displaying that the recording paper runs out, or another processing described above (steps 44 to 47).

(Effect of the Invention)

When the remainder of recording paper turns less than a prescribed quantity, as described above, a message to inform this state is displayed and, in addition, the data on the supplier of the recording paper and others are displayed simultaneously in this invention.

Since the time and labor for finding out the telephone number of the supplier and others every time when the recording paper runs out can be saved according to this contrivance, an ordering operation can be implemented rapidly and correctly, as a characteristic feature thereof.

When the automatic ordering is made, besides, necessary recording paper can be ordered in a necessary quantity only by simple key operations, and therefore much convenience is provided in practical use.

## Claims

1. A facsimile apparatus characterized by comprising a display element (20) for displaying data for ordering recording paper and others in addition to a message to inform that the remainder of the recording paper turns less than a prescribed quantity.

2. The facsimile apparatus according to claim 1, wherein the data necessary for giving an order comprise the kind, size, quantity, etc. of the paper in addition to the telephone number of the supplier.

3. A facsimile apparatus characterized by comprising a display element (20) for displaying data for ordering recording paper and others in addition to a message to inform that the remainder of the recording paper turns less than a prescribed quantity, and means (22) for transmitting automatically an order sheet of recording paper according to the data displayed on said display element (20).

4. The facsimile apparatus according to claim 3 wherein the format of the order sheet is memorized beforehand.

# F I G . 1

# F I G . 2

# F I G . 3

```
        ┌─────────────────┐
        │    START  OF     │
        │   RECEPTION      │
        └────────┬─────────┘
                 │
        ┌────────▼─────────┐
        │   RECEPTION      │──── 41
        └────────┬─────────┘
                 │
                42
            ╱─────────╲
           ╱   HAS     ╲        Y
          ╱  RECORDING  ╲──────────────────────┐
          ╲ PAPER RUN   ╱                       │
           ╲  OUT?     ╱                        │
            ╲─────────╱                         │
                 │ N                            │
                43               ┌──────────────▼──────────────┐
            ╱─────────╲          │ RUNNING-OUT  OF             │
      N    ╱    IS     ╲         │ RECORDING PAPER             │
    ┌─────╱  RECEPTION  ╲        │   IS DISPLAYED              │── 44
    │     ╲   ENDED     ╱        │ PRESENCE OR AB-             │
    │      ╲    ?      ╱         │ SENCE OF ORDER-             │
    │       ╲─────────╱          │ ING IS DISPLAYED            │
    │            │ Y             └──────────────┬──────────────┘
    │            │                              │
    │            │                   ┌──────────┘
    │            │                   │        45
    │            │               ╱─────────╲
    │            │              ╱ START KEY ╲   Y
    │            │              ╲   ON      ╱────────────────┐
    │            │               ╲   ?     ╱                 │
    │            │                ╲───────╱                  │
    │            │                    │ N                    │
    │            │                   46                      │
    │            │               ╱─────────╲                 │
    │            │         N    ╱ STOP KEY  ╲                │
    │            │        ┌─────╲   ON      ╱                │
    │            │        │      ╲   ?     ╱                 │
    │            │        │       ╲───────╱                  │
    │            │        │           │ Y                    │
    │            │        │           │              ┌───────▼────────┐   47
    │            │        │           │              │ ORDERING  FOR  │
    │            │        └───────────┘              │  RECORDING     │
    │            │                    │              │ PAPER IS MADE  │
    │            │                    │              │(BY FAX OR TEL) │
    │            │                    │              └───────┬────────┘
    │            │                    │                      │
    │      ┌─────▼────────┐           │                      │
    │      │   END  OF    │◄──────────┴──────────────────────┘
    │      │  RECEPTION   │
    │      └──────────────┘
```

FIG. 4